# EUROPÄISCHE PATENTANMELDUNG

(11) **EP 4 601 056 A1**
(43) Veröffentlichungstag der Anmeldung: **13.08.2025**
(21) Anmeldenummer: 25154584.4
(22) Anmeldetag: 29.01.2025
(51) Int. Cl.: H01M 8/04014, F28D 7/10, F28D 21/00, H01M 8/04007, H01M 8/0662, H01M 8/04119, F01N 1/08, F01N 3/00

(54) **BRENNSTOFFZELLEN-ABGASANLAGE, INSBESONDERE FÜR NUTZKRAFTFAHRZEUGE**

(30) Priorität: 06.02.2024 DE 102024103210
(71) Anmelder: Purem GmbH, 66539 Neunkirchen (DE)
(72) Erfinder: Lehr, Tobias, Esslingen (DE); Gaiser, Gerd, Reutlingen (DE)
(74) Vertreter: Ruttensperger Lachnit Trossin Gomoll

(57) **Zusammenfassung**

Eine Brennstoffzellen-Abgasanlage, insbesondere für Nutzkraftfahrzeuge, umfasst einen in einer Wärmetauscher-Längsrichtung (W) langgestreckten, von Brennstoffzellenabgas (B) durchströmbaren Wärmetauscher (18) mit einem ersten Wärmetauscher-Endbereich (20) und einem zweiten Wärmetauscher-Endbereich (22), wobei der Wärmetauscher (18) in einem Wärmetauscher-Endbereich von erstem Wärmetauscher-Endbereich (20) und zweitem Wärmetauscher-Endbereich (22) einen Brennstoffzellenabgas-Eintrittsbereich (26) und in einem Wärmetauscher-Endbereich von erstem Wärmetauscher-Endbereich (20) und zweitem Wärmetauscher-Endbereich (22) einen Brennstoffzellenabgas-Austrittsbereich (38) aufweist, wobei der Wärmetauscher (18) ein in der Wärmetauscher-Längsrichtung (W) von dem Brennstoffzellenabgas-Eintrittsbereich (20) weg führendes erstes Wärmetauscher-Strömungsvolumen (24) und ein an das erste Wärmetauscher-Strömungsvolumen (24) anschließendes, in der Wärmetauscher-Längsrichtung (W) in Richtung zu dem Brennstoffzellenabgas-Eintrittsbereich (26) zurück führendes zweites Wärmetauscher-Strömungsvolumen (30) umfasst, wobei das erste Wärmetauscher-Strömungsvolumen (24) durch eine erste Wärmetauscherwand (28) von einem Kühlmedium-Strömungsvolumen getrennt ist und durch eine zweite Wärmetauscherwand (32) von dem zweiten Wärmetauscher-Strömungsvolumen (30) getrennt ist.

## Beschreibung

Die vorliegende Erfindung betrifft eine Brennstoffzellenabgasanlage, die vorzugsweise dazu ausgebildet ist, von einer Brennstoffzelle in einem Fahrzeug, insbesondere einem Nutzkraftfahrzeug, ausgestoßenes Brennstoffzellenabgas zur Umgebung abzugeben.

Der von einer Brennstoffzelle abgegebene und insbesondere auch das Kathodenabgas enthaltene Abgasstrom ist mit im Bereich der Kathode einer Brennstoffzelle im Brennstoffzellenbetrieb anfallendem Produktwasser angereichert. Die Temperatur des eine Brennstoffzelle verlassenden Brennstoffzellenabgases kann im Bereich zwischen 50°C und 100°C liegen, und die relative Feuchte kann in einem Bereich zwischen 80% und 100% liegen. Durch die Abkühlung des Brennstoffzellenabgases beispielsweise dann, wenn dieses in eine vergleichsweise kalte Umgebungsluft abgegeben wird, steigt die relative Feuchte stark an, so dass im Brennstoffzellenabgas als Wasserdampf enthaltenes Wasser unter Nebelbildung auskondensiert.

In Nutzkraftfahrzeugen sind Abgasanlagen häufig so eingebaut, dass diese bzw. ein wesentlicher Teil derselben sich hinter bzw. seitlich einer Fahrerkabine im Wesentlichen vertikal nach oben erstrecken, so dass aus einer Abgasanlage ausgestoßenes Abgas in Höhenrichtung im oberen Bereich einer Fahrerkabine zur Umgebung austritt. Dabei wird der im Wesentlichen vertikal sich erstreckende Teil der Abgasanlage im Fahrbetrieb von der Umgebungsluft umströmt. Wenn über eine derartige Abgasanlage Brennstoffzellenabgas zur Umgebung abgegeben werden soll, kann vor allem bei vergleichsweise niedriger Temperatur der Umgebungsluft eine Kondensation von Wasser und damit eine Nebelbildung bereits im Inneren der Abgasanlage auftreten. Zwar besteht die Möglichkeit, einen Teil des auskondensierten Wassers in flüssiger Form abzuleiten. Ein erheblicher Teil des auskondensierten Wassers wird jedoch als Nebel zur Umgebung abgegeben.

Es ist die Aufgabe der vorliegenden Erfindung, eine Brennstoffzellen-Abgasanlage, insbesondere für Nutzkraftfahrzeuge, bereitzustellen, bei welcher das Ausmaß der Nebelbildung in der Brennstoffzellen-Abgasanlage bzw. beim Austritt von Brennstoffzellenabgas aus der Brennstoffzellen-Abgasanlage deutlich gemindert ist.

Erfindungsgemäß wird diese Aufgabe gelöst durch eine Brennstoffzellen-Abgasanlage, insbesondere für Nutzkraftfahrzeuge, umfassend einen in einer Wärmetauscher-Längsrichtung langgestreckten, von Brennstoffzellenabgas durchströmbaren Wärmetauscher mit einem ersten Wärmetauscher-Endbereich und einem zweiten Wärmetauscher-Endbereich, wobei der Wärmetauscher in einem Wärmetauscher-Endbereich von erstem Wärmetauscher-Endbereich und zweitem Wärmetauscher-Endbereich einen Brennstoffzellenabgas-Eintrittsbereich und in einem Wärmetauscher-Endbereich von erstem Wärmetauscher-Endbereich und zweitem Wärmetauscher-Endbereich einen Brennstoffzellenabgas-Austrittsbereich aufweist, wobei der Wärmetauscher ein in der Wärmetauscher-Längsrichtung von dem Brennstoffzellenabgas-Eintrittsbereich weg führendes erstes Wärmetauscher-Strömungsvolumen und ein an das erste Wärmetauscher-Strömungsvolumen anschließendes, in der Wärmetauscher-Längsrichtung in Richtung zu dem Brennstoffzellenabgas-Eintrittsbereich zurück führendes zweites Wärmetauscher-Strömungsvolumen umfasst, wobei das erste Wärmetauscher-Strömungsvolumen durch eine erste Wärmetauscherwand von einem Kühlmedium-Strömungsvolumen getrennt ist und durch eine zweite Wärmetauscherwand von dem zweiten Wärmetauscher-Strömungsvolumen getrennt ist.

Durch die thermische Wechselwirkung des Brennstoffzellenabgases mit einem Kühlmedium, beispielsweise den Wärmetauscher umströmende Umgebungsluft, im ersten Wärmetauscher-Strömungsvolumen und die dabei auftretende Abkühlung des Brennstoffzellenabgases wird aktiv dafür gesorgt, dass im ersten Wärmetauscher-Strömungsvolumen die relative Feuchte des Brennstoffzellenabgases stark ansteigt und einen Wert von 100% erreicht. Ein erheblicher Teil des im Brennstoffzellenabgas in Form von Wasserdampf mitgeführten Wassers kann daher im ersten Wärmetauscher-Strömungsvolumen auskondensiert und somit vom Brennstoffzellenabgas abgeschieden werden. Das vom ersten Wärmetauscher-Strömungsvolumen in das zweite Wärmetauscher-Strömungsvolumen eintretende, wasserentreicherte Brennstoffzellenabgas wird durch die über die zweite Wärmetauscherwand bestehende thermische Wechselwirkung mit dem im ersten Wärmetauscher-Strömungsvolumen strömenden Brennstoffzellenabgas erwärmt, wodurch die relative Feuchte des Brennstoffzellenabgases im zweiten Wärmetauscher-Strömungsvolumen abnimmt. Bei dem dann über den Brennstoffzellen-Austrittsbereich zur Umgebung abgegebenen wasserentreicherten und eine vergleichsweise niedrige relative Feuchte aufweisenden Brennstoffzellenabgas besteht die Gefahr der Nebelbildung auch bei vergleichsweise niedriger Umgebungstemperatur im Wesentlichen nicht.

Wenn das erste Wärmetauscher-Strömungsvolumen das zweite Wärmetauscher-Strömungsvolumen bezüglich einer im Wesentlichen in der Wärmetauscher-Längsrichtung verlaufenden Wärmetauscher-Mittenachse vorzugsweise im Wesentlichen konzentrisch umgibt, ist für die thermische Wechselwirkung des Brennstoffzellenabgases mit einem Kühlmedium über die erste Wärmetauscherwand eine vergleichsweise große Oberfläche vorgesehen, während das zweite Wärmetauscher-Strömungsvolumen durch das dieses umgebende erste Wärmetauscher-Strömungsvolumen nach außen bzw. zu dem Kühlmedium hin im Wesentlichen abgeschirmt ist.

Bei einer alternativen Ausgestaltung können das erste Wärmetauscher-Strömungsvolumen und das zweite Wärmetauscher-Strömungsvolumen in einer geschichteten Anordnung quer zur Wärmetauscher-Längsrichtung nebeneinander liegend angeordnet sein. Wenn dabei das zweite Wärmetauscher-Strömungsvolumen quer zur Wärmetauscher-Längsrichtung zwischen einem ersten Teil des ersten Wärmetauscher-Strömungsvolumens und einem zweiten Teil des ersten Wärmetauscher-Strömungsvolumens angeordnet ist, wird wiederum eine vergleichsweise gro-ße Oberfläche zur thermischen Wechselwirkung zwischen dem im ersten Wärmetauscher-Strömungsvolumen strömenden Brennstoffzellenabgas und dem Kühlmedium bereitgestellt, während das im zweiten Wärmetauscher-Strömungsvolumen strömende wasserentreicherte Brennstoffzellenabgas gegen eine thermische Wechselwirkung mit dem Kühlmedium durch das erste Wärmetauscher-Strömungsvolumen effizient abgeschirmt ist.

Bei einer kompakten Bauart kann vorgesehen sein, dass der Wärmetauscher-Eintrittsbereich und der Wärmetauscher-Austrittsbereich am ersten Wärmetauscher-Endbereich vorgesehen sind, und dass der Wärmetauscher-Austrittsbereich an das zweite Wärmetauscher-Strömungsvolumen anschließt.

Für eine insbesondere für den Einbau in Nutzkraftfahrzeuge vorteilhafte lineare Ausgestaltung einer Brennstoffzellen-Abgasanlage wird vorgeschlagen, dass ein an das zweite Wärmetauscher-Strömungsvolumen anschließendes, in Richtung von dem Wärmetauscher-Eintrittsbereich weg führendes drittes Wärmetauscher-Strömungsvolumen vorgesehen ist, wobei das dritte Wärmetauscher-Strömungsvolumen durch eine dritte Wärmetauscherwand von dem zweiten Wärmetauscher-Strömungsvolumen getrennt ist.

Um auch das im dritten Wärmetauscher-Strömungsvolumen strömende Brennstoffzellenabgas gegen thermische Wechselwirkung mit dem Kühlmedium effizient abzuschirmen, kann das zweite Wärmetauscher-Strömungsvolumen das dritte Wärmetauscher-Strömungsvolumen bezüglich der Wärmetauscher-Mittenachse vorzugsweise im Wesentlichen konzentrisch umgeben.

Bei einer derartigen linearen Ausgestaltung einer Brennstoffzellen-Abgasanlage kann der Wärmetauscher-Eintrittsbereich am ersten Wärmetauscher-Endbereich vorgesehen sein, der Wärmetauscher-Austrittsbereich am zweiten Wärmetauscher-Endbereich vorgesehen sein und der Wärmetauscher-Austrittsbereich an das dritte Wärmetauscher-Strömungsvolumen anschließen.

Um dann, wenn beispielsweise aufgrund einer ausreichend hohen Umgebungstemperatur die Gefahr einer Nebelbildung auch bei hohem Wassergehalt im Brennstoffzellenabgas im Wesentlichen nicht besteht, durch den Wärmetauscher unvermeidbar eingeführte Strömungswiderstände vermeiden oder mindern zu können, wird vorgeschlagen, dass ein von dem ersten Wärmetauscher-Strömungsvolumen oder dem Wärmetauscher-Eintrittsbereich zu dem Wärmetauscher-Austrittsbereich führender, wahlweise zur Durchströmung freigebbarer oder absperrbarer Bypass-Strömungsweg vorgesehen ist.

Insbesondere bei Ausgestaltung des Wärmetauschers mit drei in Strömungsrichtung aufeinander folgenden bzw. aneinander anschließenden Wärmetauscher-Strömungsvolumina kann zum Bereitstellen eines derartigen Bypass-Strömungswegs im Bereich der zweiten Wärmetauscherwand wenigstens eine durch eine Absperranordnung wahlweise zur Durchströmung freigebbare oder absperrbare Bypass-Strömungsöffnung vorgesehen sein.

Wenn dabei die wenigstens eine Bypass-Strömungsöffnung am zweiten Wärmetauscher-Endbereich angeordnet ist, werden im Wesentlichen das gesamte zweite Wärmetauscher-Strömungsvolumen und dritte Wärmetauscher-Strömungsvolumen bei freigegebenem Bypass-Strömungsweg von dem Brennstoffzellenabgas nicht durchströmt, wodurch eine deutliche Minderung des durch den Wärmetauscher eingeführten Strömungswiderstands erreicht wird.

Für eine effiziente thermische Wechselwirkung zwischen dem im ersten Wärmetauscher-Strömungsvolumen strömenden Brennstoffzellenabgas und dem Kühlmedium kann an einer dem Kühlmedium-Strömungsvolumen zugewandten Außenseite der ersten Wärmetauscherwand eine Mehrzahl erster Wärmeübertragungsrippen vorgesehen sein.

Um dabei für das Kühlmedium, also beispielsweise die im Fahrzustand eines Fahrzeugs die Brennstoffzellen-Abgasanlage umströmende Umgebungsluft, einen geringen Strömungswiderstand zu erreichen, können die ersten Wärmeübertragungsrippen sich zur Wärmetauscher-Längsrichtung im Wesentlichen orthogonal erstrecken. Dies bedeutet, dass die zur thermischen Wechselwirkung mit dem Kühlmedium vorgesehenen großen Oberflächen der ersten Wärmeübertragungsrippen zur Strömungsrichtung des Kühlmediums im Wesentlichen parallel orientiert sind.

Für eine effiziente thermische Wechselwirkung des Kühlmediums mit dem im ersten Wärmetauscher-Strömungsvolumen strömenden Brennstoffzellenabgas kann ferner an einer dem ersten Wärmetauscher-Strömungsvolumen zugewandten Innenseite der ersten Wärmetauscherwand eine Mehrzahl zweiter Wärmeübertragungsrippen vorgesehen sein.

Um auch für das Brennstoffzellenabgas einen möglichst geringen Strömungswiderstand zu erreichen, können die zweiten Wärmeübertragungsrippen sich zur Wärmetauscher-Längsrichtung im Wesentlichen parallel erstrecken. Auch hier sind also die zur thermischen Wechselwirkung vorgesehenen großen Oberflächen der zweiten Wärmeübertragungsrippen so orientiert, dass diese parallel zur Strömungsrichtung bzw. Hauptströmungsrichtung des Brennstoffzellenabgases im ersten Wärmetauscher-Strömungsvolumen liegen.

Das Abscheiden von im Brennstoffzellenabgas in Tröpfchenform mitgeführtem Wasser im ersten Wärmetauscher-Strömungsvolumen kann dadurch unterstützt werden, dass der Wärmetauscher-Eintrittsbereich derart ausgebildet ist, dass Brennstoffzellenabgas am Wärmetauscher-Eintrittsbereich mit bezüglich der Wärmetauscher-Mittenachse tangential orientierter Brennstoffzellenabgas-Eintrittsströmrichtung in das erste Wärmetauscher-Strömungsvolumen eintritt. Dadurch wird das Brennstoffzellenabgas auf eine kreisartige bzw. schraubenartige Strömungsbahn gezwungen, so dass unter Fliehkrafteinwirkung im Brennstoffzellenabgas mitgeführte Wassertröpfchen nach radial außen beaufschlagt werden, sich an der Innenoberfläche der ersten Wärmetauscherwand ansammeln und von dort abgeleitet werden können.

Hierfür kann eine Flüssigkeitsabführeinrichtung zum Abführen von Flüssigkeit aus dem Wärmetauscher vorgesehen sein. Diese kann eine Öffnung im Wärmetauscher-Eintrittsbereich umfassen, beispielsweise diejenige Öffnung, über welche auch das Brennstoffzellenabgas am Wärmetauscher-Eintrittsbereich in das erste Wärmetauscher-Strömungsvolumen eintritt.

Insbesondere für den Einsatz in Verbindung mit Nutzkraftfahrzeugen ist es vorteilhaft, wenn die Brennstoffzellen-Abgasanlage zum Einbau mit im Wesentlichen vertikal orientierter Wärmetauscher-Längsrichtung ausgebildet ist, so dass der erste Wärmetauscher-Endbereich einen unteren Wärmetauscher-Endbereich bildet und der zweite Wärmetauscher-Endbereich einen oberen Wärmetauscher-Endbereich bildet.

Die Erfindung betrifft ferner ein Fahrzeug, insbesondere Nutzkraftfahrzeug, umfassend eine erfindungsgemäß aufgebaute Brennstoffzellen-Abgasanlage.

Die Brennstoffzellen-Abgasanlage ist vorteilhafterweise derart in das Fahrzeug eingebaut, dass der erste Wärmetauscher-Endbereich in einer Vertikalrichtung unten positioniert ist und der zweite Wärmetauscher-Endbereich in der Vertikalrichtung oben positioniert ist. Dadurch ist insbesondere auch die Möglichkeit geschaffen, dass der Wärmetauscher von das Fahrzeug umgebender Umgebungsluft als Kühlmedium umströmt wird.

Die vorliegende Erfindung wird nachfolgend mit Bezug auf die beiliegenden Figuren detailliert beschrieben. Es zeigt:
- Fig. 1: in prinzipartiger Darstellung ein als Nutzkraftfahrzeug ausgebildetes Fahrzeug mit einer Brennstoffzelle und einer Brennstoffzellen-Abgasanlage;
- Fig. 2: eine Längsschnittansicht eines Wärmetauschers für die in Fig. 1 dargestellte Brennstoffzellen-Abgasanlage;
- Fig. 3: eine Seitenansicht eines Wärmetauschers für die in Fig. 1 dargestellte Brennstoffzellen-Abgasanlage;
- Fig. 4: eine Querschnittansicht des Wärmetauschers der Fig. 3;
- Fig. 5: ein Diagramm, welches die Entwicklung der Temperatur des den Wärmetauscher der Fig. 2 durchströmenden Brennstoffzellenabgases veranschaulicht;
- Fig. 6: ein Diagramm, welches die Entwicklung der relativen Feuchte des den Wärmetauscher der Fig. 2 durchströmenden Brennstoffzellenabgases veranschaulicht;
- Fig. 7: eine der Fig. 2 entsprechende Darstellung eines Wärmetauschers mit alternativer Ausgestaltung eines Wärmetauscher-Eintrittsbereichs;
- Fig. 8: eine Querschnittdarstellung des Wärmetauschers der Fig. 7;
- Fig. 9: eine weitere der Fig. 2 entsprechende Darstellung eines Wärmetauschers mit alternativer Ausgestaltung;
- Fig. 10: eine weitere der Fig. 2 entsprechende Darstellung eines Wärmetauschers mit alternativer Ausgestaltung;
- Fig. 11: eine weitere der Fig. 2 entsprechende Darstellung eines Wärmetauschers mit alternativer Ausgestaltung;
- Fig. 12: eine perspektivische Ansicht des Wärmetauschers der Fig. 11.

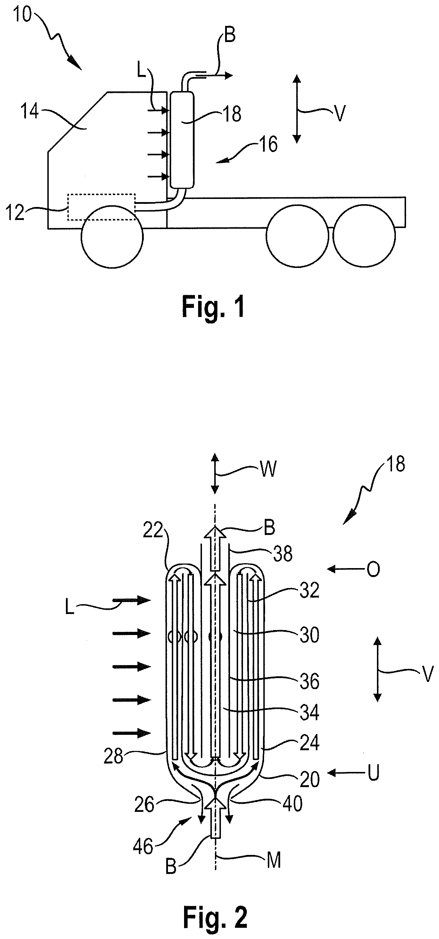

In Fig. 1 ist ein als Nutzkraftfahrzeug ausgebildetes Fahrzeug allgemein mit 10 bezeichnet. Das beispielsweise elektrisch angetriebene Fahrzeug 10 umfasst eine Brennstoffzelle 12 als Quelle elektrischer Energie, durch welche nicht dargestellte Fahrmotoren des Fahrzeugs 10 mit elektrischer Energie versorgt werden. Das von der Brennstoffzelle 12 generierte Brennstoffzellenabgas B wird über eine in einem Bereich hinter einer bzw. seitlich einer Fahrerkabine 14 sich in einer Vertikalrichtung V nach oben erstreckende Brennstoffzellen-Abgasanlage 16 zur Umgebung abgegeben.

Die Brennstoffzellen-Abgasanlage 16 umfasst als wesentlichen Bestandteil einen nachfolgend detailliert beschriebenen Wärmetauscher 18, der insbesondere im Fahrzustand des Fahrzeugs 10 durch ein Kühlmedium bereitstellende Umgebungsluft L umströmt wird, wodurch von dem den Wärmetauscher 18 durchströmenden Brennstoffzellenabgas B Wärme auf die Umgebungsluft L übertragen wird bzw. das Brennstoffzellenabgas B gekühlt wird.

Die Fig. 2 zeigt den in einer Wärmetauscher-Längsrichtung W entlang einer Wärmetauscher-Mittenachse M langgestreckten Wärmetauscher 18 im Längsschnitt. Der Wärmetauscher 18 weist eine bei dem in Fig. 1 veranschaulichten, im Wesentlichen vertikalen Einbau unten positionierten ersten Wärmetauscher-Endbereich 20 auf. Der erste Wärmetauscher-Endbereich 20 bildet somit einen unteren WärmetauscherBereich. Der Wärmetauscher 18 weist ferner einen bei dem vertikalen Einbau einen oberen Wärmetauscher-Endbereich bereitstellenden zweiten Wärmetauscher-Endbereich 22 auf.

Der in Fig. 2 dargestellte Wärmetauscher 18 weist drei zueinander bezüglich der Wärmetauscher-Mittenachse M konzentrisch angeordnete Wärmetauscher-Strömungsvolumina auf. Ein erstes Wärmetauscher-Strömungsvolumen 24 führt von einem am ersten Wärmetauscher-Endbereich 20 ausgebildeten Wärmetauscher-Eintrittsbereich 26 zu dem zweiten Wärmetauscher-Endbereich 22. Nach radial au-ßen ist das erste Wärmetauscher-Strömungsvolumen 24 durch eine erste Wärmetauscherwand 28 umgrenzt, so dass das im ersten Wärmetauscher-Strömungsvolumen 24 im Wesentlichen in einer der Wärmetauscher-Längsrichtung W entsprechenden Brennstoffzellenabgas-Hauptströmungsrichtung strömende Brennstoffzellenabgas durch die erste Wärmetauscherwand 28 von der als Kühlmedium wirksamen Umgebungsluft L getrennt ist. Die Umgebung um den Wärmetauscher 18 herum bildet dabei ein Kühlmedium-Strömungsvolumen für das den Wärmetauscher 18 an seiner Außenseite umströmende Kühlmedium Umgebungsluft.

Radial innen unmittelbar auf das erste Wärmetauscher-Strömungsvolumen folgend ist ein zweites Wärmetauscher-Strömungsvolumen 30 vorgesehen, welches im zweiten Wärmetauscher-Endbereich 22 an das erste Wärmetauscher-Strömungsvolumen 24 anschließt und vom zweiten Wärmetauscher-Endbereich 22 zurück in Richtung zum ersten Wärmetauscher-Endbereich 20 führt. Das zweite Wärmetauscher-Strömungsvolumen 30 ist durch eine zweite Wärmetauscherwand 32 nach radial au-ßen vom ersten Wärmetauscher-Strömungsvolumen 24 getrennt. Im zweiten Wärmetauscher-Strömungsvolumen 30 strömt das Brennstoffzellenabgas B mit einer im Wesentlichen in Richtung der Wärmetauscher-Längsrichtung W orientierten Brennstoffzellenabgas-Hauptströmungsrichtung, welche der Brennstoffzellenabgas-Hauptströmungsrichtung im ersten Wärmetauscher-Strömungsvolumen 24 im Wesentlichen entgegengesetzt ist.

Radial innerhalb des zweiten Wärmetauscher-Strömungsvolumens 30 ist ein drittes Wärmetauscher-Strömungsvolumen 34 vorgesehen, welches nach radial außen zum zweiten Wärmetauscher-Strömungsvolumen 30 durch eine dritte Wärmetauscherwand 36 getrennt ist. In dem im ersten Wärmetauscher-Endbereich 20 an das zweite Wärmetauscher-Strömungsvolumen 30 anschließenden dritten Wärmetauscher-Strömungsvolumen 34 strömt das Brennstoffzellenabgas B im Wesentlichen in einer in Richtung der Wärmetauscher-Längsrichtung W orientierten Brennstoffzellenabgas-Hauptströmungsrichtung, welche im Wesentlichen auch der Brennstoffzellenabgas-Hauptströmungsrichtung im ersten Wärmetauscher-Strömungsvolumen 24 entspricht und entgegengesetzt zur Brennstoffzellenabgas-Hauptströmungsrichtung im zweiten Wärmetauscher-Strömungsvolumen 30 orientiert ist.

Es sei in diesem Zusammenhang darauf hingewiesen, dass als Hauptströmungsrichtungen in den verschiedenen Wärmetauscher-Strömungsvolumina 24, 30, 34 jeweils die Strömungsrichtungskomponenten betrachtet werden, die dafür sorgen, dass das Brennstoffzellenabgas B sich von einem der Wärmetauscher-Endbereiche zum anderen Wärmetauscher-Endbereich bewegt. Dies schließt, wie nachfolgend noch erläutert, nicht aus, dass lokal von einer derartigen in Richtung der Wärmetauscher-Längsrichtung W orientierten Hauptströmungsrichtung abweichende, beispielsweise in Umfangsrichtung orientierte Strömungsrichtungskomponenten vorhanden sein können.

An das dritte Wärmetauscher-Strömungsvolumen 34 schließt ein im zweiten Wärmetauscher-Endbereich 22 positionierter Wärmetauscher-Austrittsbereich 38 an, über welchen das Brennstoffzellenabgas B, so wie dies in Fig. 1 veranschaulicht ist, beispielsweise über einen gekrümmten Rohrabschnitt zur Umgebung abgegeben werden kann.

Bei dem in Fig. 2 dargestellten Aufbau des Wärmetauschers 18 ist das zentral positionierte dritte Wärmetauscher-Strömungsvolumen 34 nach radial außen und somit zur Umgebungsluft L im Wesentlichen durch die radial außerhalb davon positionierten zweiten und ersten Wärmetauscher-Strömungsvolumina 30, 24 abgeschirmt. Das das zentral positionierte dritte Wärmetauscher-Strömungsvolumen 34 in Form eines Ringraumes umschließende zweite Wärmetauscher-Strömungsvolumen 30 ist nach radial außen und somit zur Umgebungsluft L durch das ebenfalls als Ringraum ausgebildete erste Wärmetauscher-Strömungsvolumen 24 abgeschirmt.

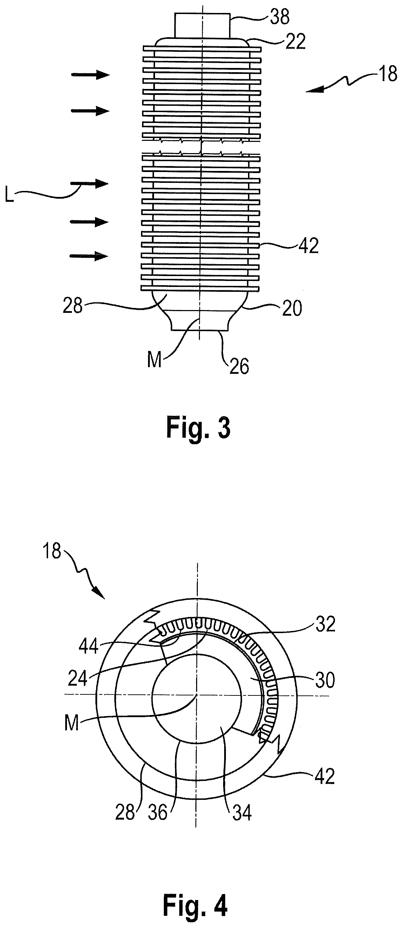

Das im ersten Wärmetauscher-Strömungsvolumen 24 strömende und am Wärmetauscher-Eintrittsbereich 26 beispielsweise über eine dort vorgesehene Eintrittsöffnung 40 im Wesentlichen in der Wärmetauscher-Längsrichtung W in den Wärmetauscher 18 bzw. das erste Wärmetauscher-Strömungsvolumen 24 eintretende und eine vergleichsweise hohe Temperatur aufweisende Brennstoffzellenabgas B steht über die erste Wärmetauscherwand 28 in thermischer Wechselwirkung mit der als Kühlmedium wirkenden Umgebungsluft L. Für eine effiziente thermische Wechselwirkung können, wie in Fig. 3 veranschaulicht, an der der Umgebungsluft L zugewandten Außenseite der ersten Wärmetauscherwand 28 mehrere erste Wärmeübertragungsrippen 42 in Richtung der Wärmetauscher-Mittenachse M aufeinander folgend angeordnet sein. Für eine effiziente thermische Wechselwirkung mit der Umgebungsluft L sind die ersten Wärmeübertragungsrippen 42 zur Wärmetauscher-Mittenachse M im Wesentlichen orthogonal orientiert, so dass die jeweils in Richtung der Wärmetauscher-Mittenachse M orientierten großen Oberflächen der Wärmeübertragungsrippen 42 zur Strömungsrichtung der Umgebungsluft L im Wesentlichen parallel orientiert sind.

An der dem ersten Wärmetauscher-Strömungsvolumen 24 zugewandten Innenseite der ersten Wärmetauscherwand 28 können zur Verbesserung der thermischen Wechselwirkung zwischen dem Brennstoffzellenabgas B und der Umgebungsluft L in Umfangsrichtung aufeinander folgend und im Wesentlichen in Richtung der Wärmetauscher-Mittenachse M sich erstreckend mehrere zweite Wärmeübertragungsrippen 44 vorgesehen sein. Die im Wesentlichen radial orientierten großen Wärmeübertragungsflächen der zweiten Wärmeübertragungsrippen 44 erstrecken sich somit im Wesentlichen in Richtung der Wärmetauscher-Mittenachse M und daher auch im Wesentlichen in Richtung der Brennstoffzellenabgas-Hauptströmungsrichtung im ersten Wärmetauscher-Strömungsvolumen 24.

Es ist darauf hinzuweisen, dass die ineinander geschachtelte bzw. einander gegenseitig umgebende Struktur der Wärmetauscher-Strömungsvolumina auch bei nicht kreisrunder Ausgestaltung derselben realisiert sein kann. Beispielsweise können diese abgeflacht runde Querschnitte oder mehreckige Querschnitte aufweisen.

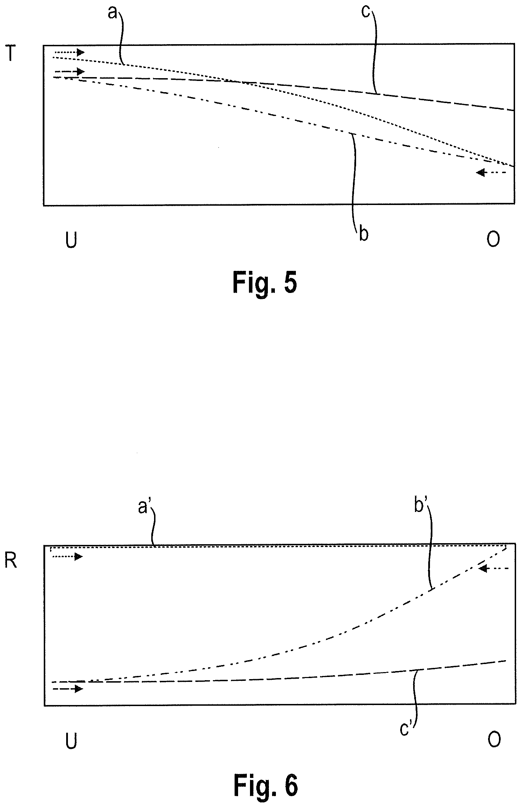

Beim Durchströmen des ersten Wärmetauscher-Strömungsvolumens 24 gibt das Brennstoffzellenabgas B vor allem bei vergleichsweise niedriger Temperatur der Umgebungsluft L Wärme an die Umgebungsluft L ab und wird dabei gekühlt. Somit nimmt beim Durchströmen des ersten Wärmetauscher-Strömungsvolumens 24 vom ersten Wärmetauscher-Endbereich 20, also einer Position U, in Richtung zum zweiten Wärmetauscher-Endbereich 22, also einer Position O, die Temperatur T des Brennstoffzellenabgases B, wie durch einen Ast a in dem Temperatur-Weg-Diagramm der Fig. 5 veranschaulicht, ab. Entsprechend nimmt, wie durch einen Ast a' in dem relative-Feuchte-Weg-Diagramm der Fig. 6 veranschaulicht, die relative Feuchte R des Brennstoffzellenabgases B zu bzw. bleibt bei 100%. Durch die Abkühlung des Brennstoffzellenabgases B wird im Brennstoffzellenabgas B in Form von Wasserdampf mitgeführtes Wasser auskondensiert und wird sich an der Innenoberfläche der ersten Wärmetauscherwand 28 bzw., sofern vorhanden, den Oberflächen der zweiten Wärmeübertragungsrippen 44 niederschlagen. Schwerkraftbedingt kann das sich an diesen Oberflächen ansammelnde Wasser dann nach unten abströmen und im Bereich einer beispielsweise die Eintrittsöffnung 40 des Brennstoffzellen-Eintrittsbereichs 26 umfassenden Flüssigkeitsabführeinrichtung 46 beispielsweise zu einem unter dem Wärmetauscher 18 positionierten Sammelbehälter abgeleitet werden.

Das gekühlte und wasserentreicherte Brennstoffzellenabgas B verlässt am zweiten Brennstoffzellen-Endbereich 22, also an der Position O, das erste Wärmetauscher-Strömungsvolumen 24 und tritt in das zweite Wärmetauscher-Strömungsvolumen 30 ein. Da dieses nach außen hin zur Umgebungsluft L durch das erste Wärmetauscher-Strömungsvolumen 24 abgeschirmt ist, nimmt die Temperatur T des Brennstoffzellenabgases B beim Durchströmen des zweiten Wärmetauscher-Strömungsvolumens 30 nicht mehr ab. Vielmehr entsteht durch die bezüglich der Brennstoffzellenabgas-Strömung im ersten Wärmetauscher-Strömungsvolumen 24 generierte Gegenströmung einer thermische Wechselwirkung zwischen dem Brennstoffzellenabgas B im zweiten Wärmetauscher-Strömungsvolumen 30 und dem Brennstoffzellenabgas B im ersten Wärmetauscher-Strömungsvolumen 24, so dass, wie durch einen Ast b in Fig. 5 veranschaulicht, die Temperatur T des Brennstoffzellenabgases B wieder zunimmt und somit, wie durch einen Ast b` in Fig. 6 veranschaulicht, dessen relative Feuchte R abnimmt.

Am unteren Ende des zweiten Wärmetauscher-Strömungsvolumens 30 tritt das wasserentreicherte Brennstoffzellenabgas B mit geringerer relativer Feuchte R in das dritte Wärmetauscher-Strömungsvolumen 34 ein und strömt durch dieses hindurch in Richtung zum Wärmetauscher-Austrittsbereich 38. Dabei kann, wie dies anhand eines Astes c in Fig. 5 veranschaulicht ist, die Temperatur T des Brennstoffzellenabgases B wieder geringfügig abnehmen, während gleichzeitig, wie durch einen Ast c` in Fig. 6 veranschaulicht, die relative Feuchte R des Brennstoffzellenabgases B geringfügig ansteigen kann.

Wie dies anhand der Fig. 5 und 6 veranschaulicht ist, nimmt somit beim Durchströmen des Wärmetauschers 18 aufgrund der thermischen Wechselwirkung mit der als Kühlmedium wirksamen Umgebungsluft L die Temperatur T des Brennstoffzellenabgases B ab, während aufgrund der Kondensation von Wasser insbesondere im ersten Wärmetauscher-Strömungsvolumen 24 auch die relative Feuchte R des Brennstoffzellenabgases B abnimmt. Das auf diese Weise wasserentreicherte Brennstoffzellenabgas B gelangt daher mit deutlich verminderter relativer Feuchte in die Umgebung, so dass auch bei vergleichsweise niedriger Temperatur der Umgebungsluft L dann, wenn das nach außen abgegebene Brennstoffzellenabgas B beim Kontakt mit der Umgebungsluft L deutlich abgekühlt wird, die Gefahr, dass die relative Feuchte R des Brennstoffzellenabgases B spontan auf einen Wert bei 100% ansteigt, deutlich gemindert ist. Dementsprechend ist auch die Gefahr, dass vor allem bei vergleichsweise niedriger Umgebungstemperatur am Austrittsbereich der Brennstoffzellen-Abgasanlage 16 eine Nebelbildung auftritt, deutlich gemindert.

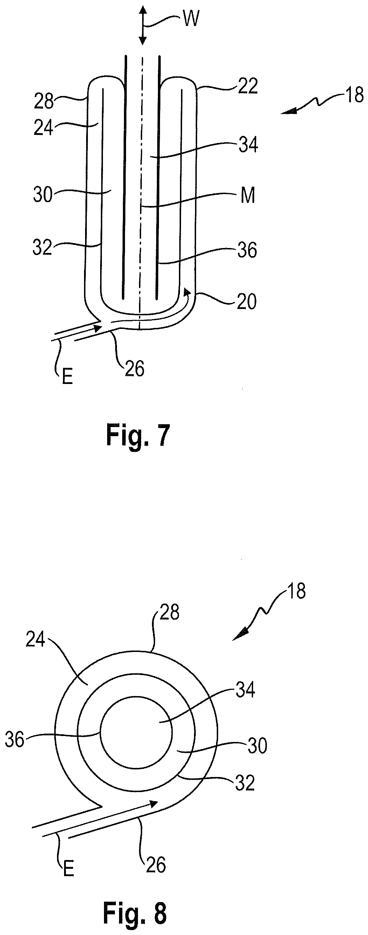

Die Fig. 7 und 8 zeigen eine Abwandlung des in Fig. 2 dargestellten Wärmetauschers 18. Bei diesem Wärmetauscher 18 ist der Wärmetauscher-Eintrittsbereich derart gestaltet, dass das Brennstoffzellenabgas mit einer Brennstoffzellenabgas-Eintrittsströmungsrichtung E in den Wärmetauscher 18 bzw. das erste Wärmetauscher-Strömungsvolumen 24 eintritt, welche bezüglich der Wärmetauscher-Mittenachse M tangential orientiert ist. Das Brennstoffzellenabgas B strömt daher im Wesentlichen in Umfangsrichtung in das erste Wärmetauscher-Strömungsvolumen 24 ein. Aufgrund der dabei auftretenden Fliehkraft werden im Brennstoffzellenabgas B enthaltene Wassertröpfchen nach radial außen gegen die Innenoberfläche der ersten Wärmetauscherwand 28 beaufschlagt, so dass derartige in Tröpfchenform im Brennstoffzellenabgas B mitgeführte und in den Wärmetauscher 18 eintretende Wasseranteile vom Brennstoffzellenabgas B abgetrennt und, so wie vorangehend beschrieben, durch eine beispielsweise im Bereich des Brennstoffzellen-Eintrittsbereichs 26 ausgebildete Flüssigkeitsabführeinrichtung 46 nach unten bzw. in Richtung zu einem Wasserspeicher oder dergleichen abgeführt werden können.

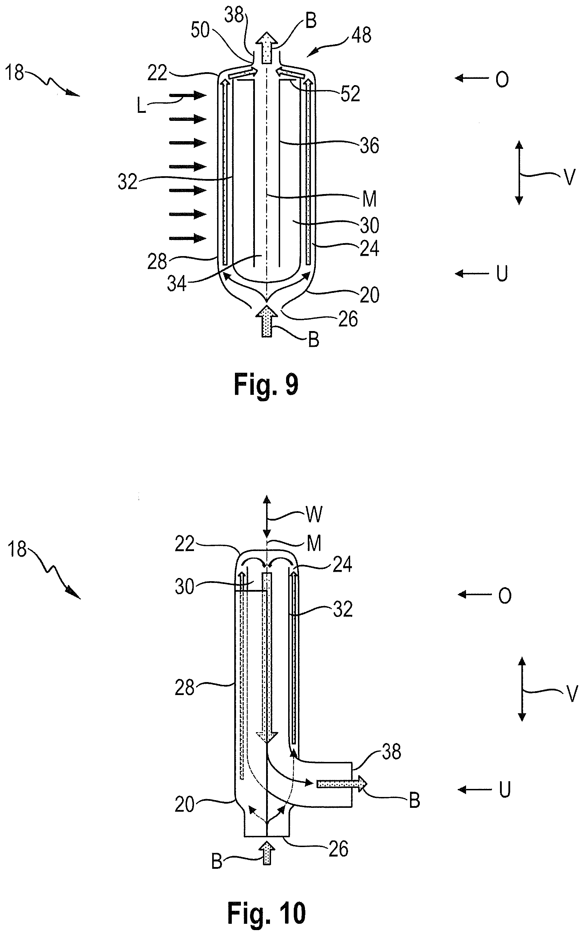

Eine weitere Abwandlung des in Fig. 2 dargestellten Wärmetauschers 18 ist in Fig. 9 veranschaulicht. Bei dem Wärmetauscher 18 der Fig. 9 ist am zweiten Wärmetauscher-Endbereich 22, also im Bereich des stromabwärtigen Endes des ersten Wärmetauscher-Strömungsvolumens 24 ein allgemein mit 48 bezeichneter Bypass-Strömungsweg gebildet. Der Bypass-Strömungsweg 48 umfasst in der dargestellten Ausgestaltungsform in der dritten Wärmetauscherwand 38 eine oder mehrere Bypass-Strömungsöffnungen 50, die durch eine zugeordnete Absperranordnung 52 wahlweise zur Durchströmung freigebbar oder absperrbar sind. Beispielsweise kann jede einer Bypass-Strömungsöffnung 50 zugeordnete Absperranordnung 52 eine durch eine zugeordnete verstellbare Klappe, einen Schieber, ein Tellerventil oder dergleichen umfassen. Beispielsweise können diese Absperranordnungen 52 so beschaffen sein, dass sie dann, wenn sie in eine die zugeordnete Bypass-Strömungsöffnung 50 zur Durchströmung freigebende Stellung gebracht sind, das zweite Wärmetauscher-Strömungsvolumen 30 in seinem stromaufwärtigen Endbereich gegen das Eintreten von Brennstoffzellenabgas B im Wesentlichen absperren.

Durch den Bypass-Strömungsweg 48 wird eine Strömungsverbindung vom stromabwärtigen Ende des ersten Wärmetauscher-Strömungsvolumens 24 direkt in den Wärmetauscher-Austrittsbereich 38 geschaffen, so dass das den Wärmetauscher 18 durchströmende Brennstoffzellenabgas B nur das erste Wärmetauscher-Strömungsvolumen 24, nicht jedoch das zweite Wärmetauscher-Strömungsvolumen 30 und das dritte Wärmetauscher-Strömungsvolumen 34 durchströmt. Dieser Zustand kann gewählt werden, wenn aufgrund der thermischen Bedingungen die Gefahr einer Kondensation von Wasser aus dem Brennstoffzellenabgas B beim Austritt des Brennstoffzellenabgases B zur Umgebung hin nicht gegeben ist. Durch das Freigeben des Bypass-Strömungswegs 48 wird, da das zweite Wärmetauscher-Strömungsvolumen 30 und das dritte Wärmetauscher-Strömungsvolumen 34 nicht durchströmt werden, der im Wärmetauscher 18 auftretende Strömungswiderstand deutlich gesenkt. Gleichwohl kann im ersten Wärmetauscher-Strömungsvolumen 34 möglicherweise auskondensiertes und sich dort ansammelndes Wasser in der vorangehend mit Bezug auf die Ausgestaltung der Fig. 2 beschriebenen Art und Weise aus dem Wärmetauscher 18 über die Flüssigkeitsabführeinrichtung 46 abgeführt werden.

Eine weitere Abwandlung des Wärmetauschers 18 ist in Fig. 10 dargestellt. Bei dem in Fig. 10 dargestellten Wärmetauscher 18 sind das erste Wärmetauscher-Strömungsvolumen 24 und das zweite Wärmetauscher-Strömungsvolumen 30 zueinander bzw. zur Wärmetauscher-Mittenachse M koaxial angeordnet. Der Wärmetauscher 18 der Fig. 10 weist jedoch kein drittes Wärmetauscher-Strömungsvolumen auf. Der Wärmetauscher-Austrittsbereich 38 ist, ebenso wie der Wärmetauscher-Eintrittsbereich 26 am ersten Wärmetauscher-Endbereich 20 positioniert. Das Brennstoffzellenabgas B verlässt den Wärmetauscher 18 also nach der über die zweite Wärmetauscherwand 32 generierten thermischen Wechselwirkung mit dem im ersten Wärmetauscher-Strömungsvolumen 24 strömenden und durch die Umgebungsluft L abgekühlten Brennstoffzellenabgas B. Bei Betrachtung der Fig. 5 und 6 bedeutet dies, dass der jeweilige letzte Ast c bzw. c` fehlt und das Brennstoffzellenabgas B mit der Temperatur T bzw. der relativen Feuchte R aus dem Wärmetauscher 18 auftritt, die jeweils am Ende des Astes b bzw. b` an der Position U vorhanden ist.

Auch der Wärmetauscher 18 der Fig. 10 kann in ein Fahrzeug derart integriert werden, dass dessen Wärmetauscher-Mittenachse M im Wesentlichen vertikal orientiert ist, beispielsweise so wie in Fig. 1 dargestellt, seitlich bzw. hinter der Fahrerkabine 14. Das Brennstoffzellenabgas B kann dann in einem unteren Bereich des Fahrzeugs 10 zur Umgebung ausgestoßen werden.

Es ist darauf hinzuweisen, dass auch bei der in Fig. 10 dargestellten Ausgestaltungsvariante des Wärmetauschers 18 ein Bypass-Strömungsweg vorhanden sein kann, der dann direkt vom Wärmetauscher-Eintrittsbereich 26 zum Wärmetauscher-Austrittsbereich 38 führt, so dass dann, wenn dies aus thermischen Gründen nicht erforderlich ist, eine Durchströmung des ersten Wärmetauscher-Strömungsvolumens 24 und des zweiten Wärmetauscher-Strömungsvolumens 30 nicht erfolgt.

Bei einer derartigen Ausgestaltung, bei welcher, wie dies in Fig. 9 dargestellt und mit Bezug auf die Fig. 10 vorangehen beschrieben wurde, ein Bypass-Strömungsweg wahlweise freigegeben oder abgesperrt werden kann, kann vorzugsweise vorgesehen sein, dass die hierfür eingesetzte Absperranordnung so angesteuert wird, dass die Menge des über den Bypass-Strömungsweg abgeleiteten Brennstoffzellenabgases B so gewählt wird, dass eine Nebelbildung am Austritt der Brennstoffzellen-Abgasanlage 16 verhindert wird. Hierfür können verschiedene Parameter, wie z. B. die Temperatur der Umgebungsluft L, die Luftfeuchtigkeit der Umgebungsluft L, die Temperatur des Brennstoffzellenabgases B bzw. auch die relative Feuchte des Brennstoffzellenabgases B berücksichtigt werden.

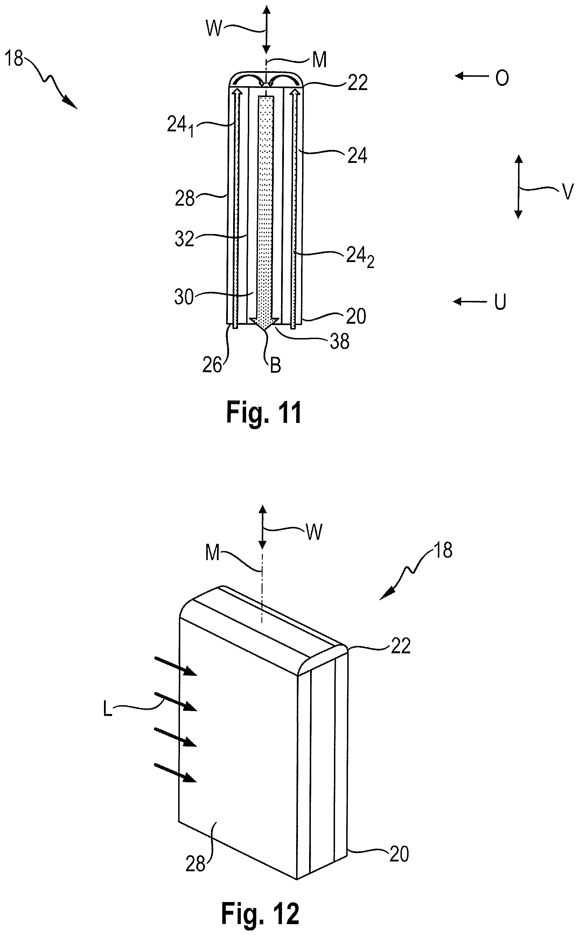

Eine weitere Abwandlung des Wärmetauschers 18 ist in den Fig. 11 und 12 dargestellt. Bei dieser Ausgestaltung sind die vorhandenen Wärmetauscher-Strömungsvolumina nicht einander umgeben bzw. konzentrisch zueinander angeordnet, sondern sind in einer geschichteten, im Wesentlichen planaren Anordnung seitlich nebeneinander bezüglich der Wärmetauscher-Längsrichtung W und der Wärmetauscher-Mittenachse M bzw. einer die Wärmetauscher-Mittenachse M enthaltenden und zur Zeichenebene der Fig. 1 orthogonalen Ebene nebeneinander angeordnet.

Auch der in den Fig. 11 und 12 dargestellte Wärmetauscher 18 weist nur das erste Wärmetauscher-Strömungsvolumen 24 und das zweite Wärmetauscher-Strömungsvolumen 30 auf. Das erste Wärmetauscher-Strömungsvolumen 24 ist in einen ersten Teil 24₁ und einen zweiten Teil 24₂ aufgeteilt. Zwischen dem ersten Teil 24₁ des ersten Wärmetauscher-Strömungsvolumens 24 und dem zweiten Teil 24₂ des ersten Wärmetauscher-Strömungsvolumens 24 ist das zweite Wärmetauscher-Strömungsvolumen 30 positioniert.

Auch bei dieser Ausgestaltung ist bei vergleichsweise großer Wechselwirkungsoberfläche zwischen dem ersten Wärmetauscher-Strömungsvolumen 24 und der Umgebung das zweite Wärmetauscher-Strömungsvolumen 30 effizient gegen thermische Wechselwirkung mit der Umgebungsluft L abgeschirmt. Auch der Wärmetauscher 18 der Fig. 11 und 12 kann in ein Fahrzeug, insbesondere das in Fig. 1 dargestellte Nutzfahrzeug, Fahrzeug 10 derart eingebaut werden, dass die Wärmetauscher-Mittenachse M im Wesentlichen vertikal orientiert ist, so dass das Brennstoffzellenabgas B sowohl in dem an der unteren Position U liegenden ersten Wärmetauscher-Endbereich 20 in den Wärmetauscher 18 eintritt, als auch an der unteren Position U aus dem Wärmetauscher 18 austritt.

Der Wärmetauscher der Fig. 10 und 11 kann beispielsweise derart in das Fahrzeug 10 integriert werden, dass für eine effiziente Umströmung mit der Umgebungsluft L die den ersten Teil 24₁ und den zweiten Teil 24₂ nach außen, also zur Umgebungsluft L hin abgrenzende erste Wärmetauscherwand 28 im Wesentlichen parallel zur Fahrzeuglängsrichtung und somit im Wesentlichen parallel zur Strömungsrichtung der Umgebungsluft L bei einer Vorwärtsbewegung des Fahrzeugs orientiert ist. Auf diese Art und Weise kann an beiden Längsseiten des Wärmetauschers 18 eine effiziente thermische Wechselwirkung mit der Umgebungsluft L erreicht werden.

Es ist abschließend darauf hinzuweisen, dass alternativ oder zusätzlich zur Verwendung der Umgebungsluft L das im ersten Wärmetauscher-Strömungsvolumen strömende Brennstoffzellenabgas in thermische Wechselwirkung mit einem anderen, beispielsweise flüssigen Kühlmedium gebracht werden kann. Hierzu kann an der Außenseite der ersten Wärmetauscherwand 28 ein Strömungsvolumen für derartiges flüssiges Kühlmedium vorgesehen sein, welches in einem Kühlmediumkreislauf des Fahrzeugs zirkulieren kann.

## Patentansprüche

1. Brennstoffzellen-Abgasanlage, insbesondere für Nutzkraftfahrzeuge, umfassend einen in einer Wärmetauscher-Längsrichtung (W) langgestreckten, von Brennstoffzellenabgas (B) durchströmbaren Wärmetauscher (18) mit einem ersten Wärmetauscher-Endbereich (20) und einem zweiten Wärmetauscher-Endbereich (22), wobei der Wärmetauscher (18) in einem Wärmetauscher-Endbereich von erstem Wärmetauscher-Endbereich (20) und zweitem Wärmetauscher-Endbereich (22) einen Brennstoffzellenabgas-Eintrittsbereich (26) und in einem Wärmetauscher-Endbereich von erstem Wärmetauscher-Endbereich (20) und zweitem Wärmetauscher-Endbereich (22) einen Brennstoffzellenabgas-Austrittsbereich (38) aufweist, wobei der Wärmetauscher (18) ein in der Wärmetauscher-Längsrichtung (W) von dem Brennstoffzellenabgas-Eintrittsbereich (20) weg führendes erstes Wärmetauscher-Strömungsvolumen (24) und ein an das erste Wärmetauscher-Strömungsvolumen (24) anschließendes, in der Wärmetauscher-Längsrichtung (W) in Richtung zu dem Brennstoffzellenabgas-Eintrittsbereich (26) zurück führendes zweites Wärmetauscher-Strömungsvolumen (30) umfasst, wobei das erste Wärmetauscher-Strömungsvolumen (24) durch eine erste Wärmetauscherwand (28) von einem Kühlmedium-Strömungsvolumen getrennt ist und durch eine zweite Wärmetauscherwand (32) von dem zweiten Wärmetauscher-Strömungsvolumen (30) getrennt ist.

2. Brennstoffzellen-Abgasanlage nach Anspruch 1,
**dadurch gekennzeichnet, dass** das erste Wärmetauscher-Strömungsvolumen (24) das zweite Wärmetauscher-Strömungsvolumen (30) bezüglich einer im Wesentlichen in der Wärmetauscher-Längsrichtung (W) verlaufenden Wärmetauscher-Mittenachse (M) vorzugsweise im Wesentlichen konzentrisch umgibt.

3. Brennstoffzellen-Abgasanlage nach Anspruch 1,
**dadurch gekennzeichnet, dass** das erste Wärmetauscher-Strömungsvolumen (24) und das zweite Wärmetauscher-Strömungsvolumen (30) in einer geschichteten Anordnung quer zur Wärmetauscher-Längsrichtung (W) nebeneinander liegend angeordnet sind,
vorzugsweise wobei das zweite Wärmetauscher-Strömungsvolumen (30) quer zur Wärmetauscher-Längsrichtung (W) zwischen einem ersten Teil (24₁) des ersten Wärmetauscher-Strömungsvolumens (24) und einem zweiten Teil (24₂) des ersten Wärmetauscher-Strömungsvolumens (24) angeordnet ist.

4. Brennstoffzellen-Abgasanlage nach Anspruch 2 oder 3,
**dadurch gekennzeichnet, dass** der Wärmetauscher-Eintrittsbereich (26) und der Wärmetauscher-Austrittsbereich (38) am ersten Wärmetauscher-Endbereich (20) vorgesehen sind, und dass der Wärmetauscher-Austrittsbereich (38) an das zweite Wärmetauscher-Strömungsvolumen (30) anschließt.

5. Brennstoffzellen-Abgasanlage nach einem der Ansprüche 1-4,
**dadurch gekennzeichnet, dass** ein an das zweite Wärmetauscher-Strömungsvolumen (30) anschließendes, in Richtung von dem Wärmetauscher-Eintrittsbereich (26) weg führendes drittes Wärmetauscher-Strömungsvolumen (34) vorgesehen ist, wobei das dritte Wärmetauscher-Strömungsvolumen (34) durch eine dritte Wärmetauscherwand (36) von dem zweiten Wärmetauscher-Strömungsvolumen (30) getrennt ist.

6. Brennstoffzellen-Abgasanlage nach Anspruch 5, sofern auf Anspruch 2 rückbezogen,
**dadurch gekennzeichnet, dass** das zweite Wärmetauscher-Strömungsvolumen (30) das dritte Wärmetauscher-Strömungsvolumen (34) bezüglich der Wärmetauscher-Mittenachse (M) vorzugsweise im Wesentlichen konzentrisch umgibt.

7. Brennstoffzellen-Abgasanlage nach Anspruch 5 oder 6,
**dadurch gekennzeichnet, dass** der Wärmetauscher-Eintrittsbereich (26) am ersten Wärmetauscher-Endbereich (20) vorgesehen ist, dass der Wärmetauscher-Austrittsbereich (38) am zweiten Wärmetauscher-Endbereich (22) vorgesehen ist, und dass der Wärmetauscher-Austrittsbereich (38) an das dritte Wärmetauscher-Strömungsvolumen (34) anschließt.

8. Brennstoffzellen-Abgasanlage nach einem der Ansprüche 1-7,
**dadurch gekennzeichnet, dass** ein von dem ersten Wärmetauscher-Strömungsvolumen (24) oder dem Wärmetauscher-Eintrittsbereich (26) zu dem Wärmetauscher-Austrittsbereich (38) führender, wahlweise zur Durchströmung freigebbarer oder absperrbarer Bypass-Strömungsweg vorgesehen ist.

9. Brennstoffzellen-Abgasanlage nach Anspruch 5 oder einem der Ansprüche 8-8, sofern auf Anspruch 5 rückbezogen,
**dadurch gekennzeichnet, dass** im Bereich der zweiten Wärmetauscherwand (32) wenigstens eine durch eine Absperranordnung (52) wahlweise zur Durchströmung freigebbare oder absperrbare Bypass-Strömungsöffnung (50) vorgesehen ist,
vorzugsweise wobei die wenigstens eine Bypass-Strömungsöffnung (50) am zweiten Wärmetauscher-Endbereich (22) angeordnet ist.

10. Brennstoffzellen-Abgasanlage nach einem der Ansprüche 1-9,
**dadurch gekennzeichnet, dass** an einer dem Kühlmedium-Strömungsvolumen zugewandten Außenseite der ersten Wärmetauscherwand (28) eine Mehrzahl erster Wärmeübertragungsrippen (42) vorgesehen ist,
vorzugsweise wobei die ersten Wärmeübertragungsrippen (42) sich zur Wärmetauscher-Längsrichtung (W) im Wesentlichen orthogonal erstrecken.

11. Brennstoffzellen-Abgasanlage nach einem der Ansprüche 1-10,
**dadurch gekennzeichnet, dass** an einer dem ersten Wärmetauscher-Strömungsvolumen (24) zugewandten Innenseite der ersten Wärmetauscherwand (28) eine Mehrzahl zweiter Wärmeübertragungsrippen (44) vorgesehen ist,
vorzugsweise wobei die zweiten Wärmeübertragungsrippen (44) sich zur Wärmetauscher-Längsrichtung (W) im Wesentlichen parallel erstrecken.

12. Brennstoffzellen-Abgasanlage nach Anspruch 2 oder einem der Ansprüche 3-11, sofern auf Anspruch 2 rückbezogen,
**dadurch gekennzeichnet, dass** der Wärmetauscher-Eintrittsbereich (26) derart ausgebildet ist, dass Brennstoffzellenabgas (B) am Wärmetauscher-Eintrittsbereich (26) mit bezüglich der Wärmetauscher-Mittenachse (M) tangential orientierter Brennstoffzellenabgas-Eintrittsströmrichtung (E) in das erste Wärmetauscher-Strömungsvolumen (24) eintritt.

13. Brennstoffzellen-Abgasanlage nach einem der Ansprüche 1-12,
**dadurch gekennzeichnet,**
**dass** eine Flüssigkeitsabführeinrichtung (46) zum Abführen von Flüssigkeit aus dem Wärmetauscher (18) vorgesehen ist,
oder/und
**dass** die Brennstoffzellen-Abgasanlage (16) zum Einbau mit im Wesentlichen vertikal orientierter Wärmetauscher-Längsrichtung (W) ausgebildet ist, so dass der erste Wärmetauscher-Endbereich (20) einen unteren Wärmetauscher-Endbereich bildet und der zweite Wärmetauscher-Endbereich (22) einen oberen Wärmetauscher-Endbereich bildet.

14. Fahrzeug, insbesondere Nutzkraftfahrzeug, umfassend eine Brennstoffzellen-Abgasanlage (16) nach einem der Ansprüche 1-13.
vorzugsweise wobei die Brennstoffzellen-Abgasanlage (16) derart in das Fahrzeug (10) eingebaut ist, dass der erste Wärmetauscher-Endbereich (20) in einer Vertikalrichtung (V) unten positioniert ist und der zweite Wärmetauscher-Endbereich (22) in der Vertikalrichtung (V) oben positioniert ist.

15. Fahrzeug nach Anspruch 14,
**dadurch gekennzeichnet, dass** die Brennstoffzellen-Abgasanlage (16) derart in das Fahrzeug (10) eingebaut ist, dass der Wärmetauscher (18) von das Fahrzeug (10) umgebender Umgebungsluft (L) als Kühlmedium umströmbar ist.
